# FASCICULE DE BREVET EUROPEEN

(11) **EP 3 895 127 B1**
(45) Date de publication et mention de la délivrance du brevet: **27.07.2022**
(21) Numéro de dépôt: 19842393.1
(22) Date de dépôt: 12.12.2019
(51) Int. Cl.: G06T 7/80

(54) **DISPOSITIF ET PROCÉDÉ D'HYBRIDATION INERTIELLE/VIDÉO**
VORRICHTUNG UND VERFAHREN ZUR TRÄGHEITS-/VIDEOHYBRIDISIERUNG
DEVICE AND METHOD FOR INERTIAL/VIDEO HYBRIDISATION

(30) Priorité: 12.12.2018 FR 1872762
(43) Date de publication de la demande: 20.10.2021
(73) Titulaire: SAFRAN ELECTRONICS & DEFENSE, 92100 Boulogne Billancourt (FR)
(72) Inventeur: ELIE, Philippe, 77550 Moissy-Cramayel (FR)
(74) Mandataire: Regimbeau
(86) Numéro de dépôt international: PCT/FR2019/053047
(87) Numéro de publication internationale: WO 2020/120914

(56) Documents cités:
- EP-A2- 0 691 599
- US-A1- 2005 237 385
- US-A1- 2018 342 082

## Description

### DOMAINE DE L'INVENTION

La présente invention concerne un dispositif et un procédé d'hybridation inertielle/vidéo.

### ETAT DE LA TECHNIQUE

Il est connu d'embarquer dans un porteur tel qu'un aéronef une centrale inertielle produisant des données inertielles relatives à ce porteur (sa position, son attitude, et sa vitesse typiquement). La centrale inertielle produit de telles données à partir de capteurs inertiels tels que des accéléromètres et des gyromètres.

Toutefois, les données produites par une centrale inertielles dérivent. C'est pourquoi il a été proposé d'utiliser d'autres types de capteurs que des capteurs inertiels, produisant des données permettant de corriger les données inertielles produites par la centrale inertielle (on parle également de recalage des données inertielles dans la littérature). Le traitement combinant les données inertielles et les données d'un autre type est communément appelé hybridation.

Différents types d'hybridation ont été proposés. La plus connue est l'hybridation inertielle/satellite (généralement abrégée en GPS/INS), qui consiste à combiner données inertielles et données de positionnement par satellite captées par un récepteur communiquant avec une constellation de satellites. Les données de positionnement par satellite dérivent peu, et sont donc à même de corriger les données inertielles.

Ce type d'hybridation a notamment fait ses preuves pour aider à la navigation d'un aéronef au cours de son vol.

Toutefois, il convient de rappeler que les signaux GPS reçus par le récepteur sont très sensibles à la présence de brouilleurs. De tels brouilleurs sont aujourd'hui utilisés par un grand nombre d'automobilistes pour ne pas pouvoir être géo-localisés et notamment aux abords des zones aéroportuaires. Un autre inconvénient des signaux GPS est que leur propagation est gênée par la présence de bâtiments. Pour toutes ces raisons, un aéronef en phase de roulage ou d'atterrissage reçoit des signaux GPS bruités au point de rendre l'hybridation GPS/INS inefficace.

Pour pallier cet inconvénient, des hybridations alternatives ont été proposées. L'une d'entre elles est l'hybridation inertielle/vidéo. L'hybridation inertielle vidéo consiste à déterminer une vitesse du porteur à l'aide d'images acquises par une caméra qui scrute l'environnement du porteur au cours de son mouvement. C'est cette vitesse qui est utilisée pour corriger les données inertielles.

Pour qu'une hybridation inertielle/vidéo fonctionne efficacement, la centrale inertielle et la caméra qui acquiert les images doivent être harmonisées, c'est à dire que le positionnement relatif du repère dans lequel les données inertielles sont exprimées et le repère dans lequel est exprimée la vitesse estimée à partir des images de la caméra est connu.

Une désharmonisation entre la caméra et la centrale inertielle peut être causée par un déplacement excessif de la caméra par rapport à l'aéronef. Ceci met en péril la précision de la solution de navigation résultant de l'hybridation inertielle/vidéo.

Or, dans le domaine de l'aéronautique, il est crucial que des erreurs soient maintenues dans un intervalle de tolérance borné afin de respecter des certifications de sécurité (« safety »), et de détecter lorsqu'une erreur quitte son intervalle de tolérance.

EP0691599 décrit un procédé permettant de déterminer la décalibration d'une caméra sur un véhicule par comparaison de la position d'un amer visuel dans une image acquise avec sa position de référence stockée.

### EXPOSE DE L'INVENTION

Un but de l'invention est de détecter un niveau de désharmonisation excessif entre une centrale inertielle et une caméra d'un dispositif d'hybridation inertielle/vidéo.

Il est à cet effet proposé, selon un premier aspect de l'invention, un dispositif d'hybridation inertielle/vidéo destiné à être embarqué sur un porteur, le dispositif étant décrit dans la revendication 1.

Le dispositif selon le premier aspect de l'invention peut être complété à l'aide des caractéristiques suivantes prises seules ou bien en combinaison lorsque cela est techniquement possible.

La position de référence de l'amer peut être une position de l'amer dans une image de référence acquise par la caméra alors que la centrale inertielle et la caméra sont harmonisés.

Selon l'invention, le dispositif d'hybridation comprend une deuxième caméra configurée pour acquérir une deuxième image montrant également l'amer, et l'unité de traitement est en outre configurée pour :
- localiser une deuxième position de l'amer prédéterminé dans la deuxième image acquise,
- déterminer la position de référence de l'amer en appliquant à la deuxième position une transformation prédéterminée représentative d'un changement de repère depuis la deuxième caméra vers la première caméra.

De préférence, l'unité de traitement est configurée pour ne pas hybrider les données inertielles en se fondant sur la vitesse estimée, lorsque l'écart est supérieur au seuil prédéterminé.

De préférence, l'unité de traitement est configurée pour estimer la vitesse du porteur en s'aidant de l'écart calculé, de sorte à corriger une désharmonisation de la caméra par rapport à la centrale inertielle, lorsque l'écart calculé n'est pas supérieur au seuil prédéterminé, et pour hybrider la vitesse avec les données inertielles de sorte à produire une solution de navigation du porteur.

De préférence, l'unité de traitement est configurée pour :
- déterminer un niveau de contraste dans une zone montrant l'amer dans l'image acquise,
- calculer un écart de contraste entre le niveau de contraste déterminé dans la zone et un niveau de contraste de référence,
- comparer l'écart de contraste avec un seuil de contraste prédéterminé,
- signaler une alerte lorsque l'écart de contraste est supérieur au seuil de contraste prédéterminé.

Il est également proposé un porteur, tel qu'un aéronef, comprenant un dispositif d'hybridation inertielle/vidéo selon le premier aspect de l'invention, et un amer fixé sur le porteur en vue de la caméra.

Il est également proposé, selon un troisième aspect de l'invention, un procédé d'hybridation inertielle/vidéo, le procédé étant décrit à la revendication 6.

Le porteur est par exemple un aéronef. Les étapes du procédé peuvent avantageusement être mises en oeuvre lorsque l'aéronef est en phase de roulage ou d'atterrissage.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] La figure 1 illustre de façon schématique un dispositif d'hybridation inertielle/vidéo selon un exemple non couvert par les revendications, embarqué sur un porteur.
[Fig. 2] La figure 2 est un organigramme d'étapes d'un procédé selon un mode de réalisation de l'invention.
[Fig. 3] La figure 3 illustre de façon schématique un dispositif d'hybridation inertielle/vidéo selon un deuxième mode de réalisation de l'invention, embarqué sur un porteur. Sur l'ensemble des figures, les éléments similaires portent des références identiques.

### DESCRIPTION DETAILLEE DE L'INVENTION

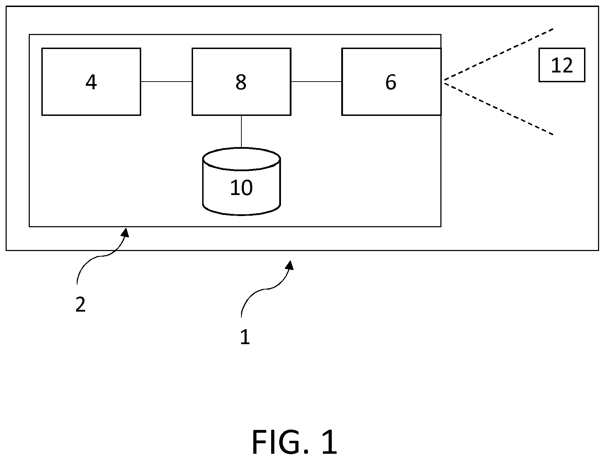

En référence à la **figure** 1, un porteur 1 tel qu'un aéronef comprend un dispositif d'hybridation 2 inertielle/vidéo, plus simplement appelé dispositif d'hybridation 2 dans la suite.

Le dispositif d'hybridation 2 comprend une centrale inertielle 4, une caméra 6, une unité de traitement 8, et une mémoire 10.

La centrale inertielle 4, conventionnelle, comprend une pluralité de capteurs inertiels, tels que des accéléromètres et des gyromètres. La centrale est configurée pour produire des données inertielles relatives au porteur 1. Ces données inertielles comprennent typiquement des données de position, de vitesse et d'attitude du porteur 1). Les données inertielles sont exprimées dans un premier repère.

La centrale inertielle 4 est fixée sur une paroi du porteur 1.

La caméra 6 est fixée sur une surface extérieure du porteur 1. La caméra 6 est positionnée pour visualiser l'environnement du porteur 1. La caméra 6 est de plus positionnée de sorte qu'une partie du porteur 1 est dans le champ de vision de la caméra 6. Il est en particulier fait en sorte qu'au moins un amer 12 prédéterminé, fixé sur le porteur 1, soit en vue de la caméra 6.

Un amer 12 est un élément servant de point de repère de la caméra 6. Un amer 12 peut par exemple être natif, c'est-à-dire être formé par un élément existant de l'aéronef, tel qu'une antenne, un motif, une sonde Pitot, etc. Alternativement, un amer 12 est de nature artificielle, c'est-à-dire qu'il est ajouté à l'aéronef pour servir uniquement de point de repère. Par exemple, l'amer 12 artificiel peut prendre la forme d'une mire appliquée sur une surface extérieure de l'aéronef.

L'unité de traitement 8 est configurée pour mettre en oeuvre une hybridation inertielle/vidéo classique à l'aide de données inertielles fournies par la centrale inertielle 4 et des données calculées à partir d'images acquises par la caméra 6. On verra dans la suite que l'unité de traitement 8 est configurée pour mettre en oeuvres d'autres traitements en amont d'une telle hybridation, visant à détecter une désharmonisation excessive entre la caméra 6 et la centrale inertielle 4.

L'unité de traitement 8 comprend par exemple au moins un processeur configuré pour exécuter un programme d'ordinateur réalisant ces traitements.

Le dispositif d'hybridation 2 comprend par ailleurs une mémoire 10 configurée pour mémoriser des données. La mémoire 10 comprend notamment des données permettant à l'unité de traitement 8 de reconnaître dans une image chaque amer 12, à l'aide d'un traitement de reconnaissance de formes connu en lui-même.

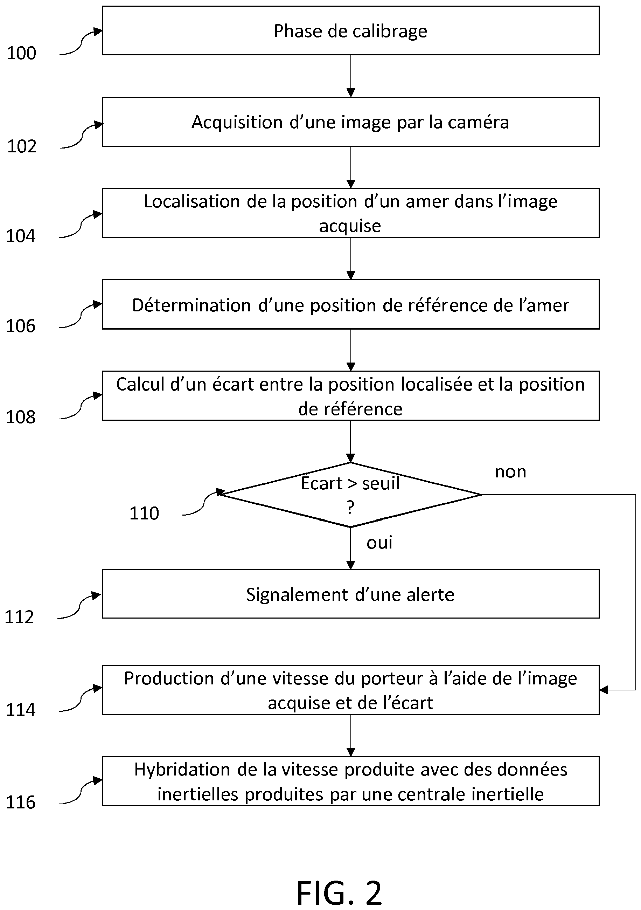

En référence à la **figure 2****,** un procédé d'hybridation inertielle/vidéo comprend les étapes suivantes.

Dans une phase préliminaire de calibrage 100, la caméra 6 est positionnée dans une position de référence. Dans cette position, la caméra 6 et la centrale inertielle 4 sont harmonisées. La caméra 6 acquiert une image de référence montrant le ou chaque amer 12 fixé sur le porteur 1. Pour au moins un amer 12, l'unité de traitement 8 applique un traitement de reconnaissance de forme pour reconnaitre l'amer 12 dans l'image de référence. L'unité de traitement 8 localise dans cette image une position de l'amer 12, dite de référence. Cette position est typiquement un pixel de l'image défini par un numéro de ligne et un numéro de colonne (i,j). La position de référence de chaque amer 12 est mémorisée dans la mémoire 10.

Cette phase préliminaire de calibrage 100 est typiquement mise en oeuvre alors que le porteur 1 est à l'arrêt, par exemple au cours d'une période de maintenance du porteur 1.

Dans une phase d'utilisation ultérieure, le porteur 1 se met en mouvement, et le dispositif d'hybridation 2 met en oeuvre les étapes suivantes.

La centrale inertielle 4 produit des données inertielles à l'aide de ses capteurs inertiels, de manière conventionnelle.

En parallèle, la caméra 6 acquiert une pluralité d'images, dont une première image montrant l'environnement du porteur 1 (étape 102). Comme indiqué précédemment, du fait de la position dans laquelle la caméra 6 a été placée sur le porteur 1, la première image acquise par la caméra 6 montrent également le ou chaque amer 12 utilisé.

L'unité de traitement 8 applique le traitement de reconnaissance de forme dont elle dispose pour reconnaître un amer 12 dans la première image acquise. L'unité de traitement 8 localise la position de l'amer 12 reconnu (étape 104). Cette position est un pixel de l'image défini par un numéro de ligne et un numéro de colonne (i',j').

Par ailleurs, l'unité de traitement 8 détermine la position de référence (i,j) (étape 106). Dans le mode de réalisation illustré en figure 1, cette étape de détermination comprend une simple lecture de cette donnée préalablement mémorisée dans la mémoire 10 du dispositif d'hybridation 2.

L'unité de traitement 8 calcule l'écart entre la position de l'amer 12 dans la première image et la position de référence (étape 108).

L'unité de traitement 8 compare ensuite cet écart à un seuil prédéterminé (étape 110).

Si l'écart est supérieur au seuil prédéterminé, alors l'unité de traitement 8 signale une alerte (étape 112). En effet, un écart trop élevé entre la position de référence et la position de l'amer 12 dans la première image est très probablement révélatrice d'un déplacement de la caméra 6 par rapport à sa position de référence, et donc d'une désharmonisation potentielle entre la caméra 6 et la centrale inertielle 4.

L'alerte est par exemple signalée au cours de l'étape 112 à un poste de pilotage du porteur 1, de sorte qu'un pilote du porteur 1 puisse être informée de la défaillance du dispositif d'hybridation 2.

Par ailleurs, en cas d'alerte, l'unité de traitement 8 fait en sorte qu'aucune hybridation inertielle/vidéo soit mise en oeuvre à partir d'une vitesse issue de la caméra 6, en particulier une vitesse qui serait calculé à partir de l'image dans laquelle un écart supérieur au seuil a été décelé.

Si au contraire l'écart n'est pas supérieur au seuil prédéterminé, l'unité de traitement 8 calcule une vitesse estimée du porteur 1 à l'aide de la première image et de l'écart (étape 114).

Plus précisément, au cours de l'étape 114, l'unité de traitement 8 repère au moins un amer externe non fixé au porteur dans deux images acquises à des instants différents par la caméra 6 : la première image et une autre image acquise avant ou après la première image par la caméra 6. Cet amer externe occupe des positions différentes dans ces deux images lorsque le porteur 1 se déplace. L'unité de traitement 8 estime d'abord le déplacement de cet amer externe entre les deux images. Ensuite, l'unité de traitement corrige ce déplacement à l'aide de l'écart de position calculé précédemment dans l'étape 108. Le déplacement corrigé est ensuite divisé par la période de temps qui sépare les acquisitions respectives des deux images, de sorte à obtenir la vitesse estimée.

Ensuite, l'unité de traitement 8 met en oeuvre une hybridation entre les données inertielles acquises par la centrale inertielle 4 et la vitesse calculée, de sorte à produire une solution de navigation du porteur 1 (étape 116).

L'unité de traitement 8 peut également, à titre optionnel, déterminer un niveau de contraste dans une zone montrant l'amer 12 dans la première image acquise. Ce niveau de contraste peut être un contraste entre différentes parties de l'amer 12 visualisé (par exemple, dans le cas d'un amer 12 de type mire artificielle, le contraste entre des zones noires et des zones blanches de la mire) ou un contraste entre l'amer 12 lui-même et son environnement). Dans ce cas, l'unité de traitement 8 calcule ensuite un écart de contraste entre le niveau de contraste déterminé dans la zone considérée, et un niveau de contraste de référence, et comparer l'écart de contraste avec un seuil de contraste prédéterminé. Une alerte est signalée sélectivement lorsque l'écart de contraste est supérieur au seuil de contraste prédéterminé. Ces étapes additionnelles permettent de détecter des conditions de visibilité de la caméra 6 conduisant à l'obtention d'une estimée de vitesse insuffisamment fiable pour être injectée dans une hybridation inertielle/vidéo. Ces étapes peuvent être mises en oeuvre avant, pendant ou après les étapes 104, 106, 108, 110.

Les étapes décrites précédemment sont répétées pour plusieurs images acquises par la caméra 6.

On notera que l'emploi d'un seul amer suffit à permettre la détection d'une désharmonisation, et à corriger dans une certaine mesure la vitesse estimée par l'unité de traitement. Toutefois, utiliser plusieurs amers permet de réaliser une correction plus efficace d'une telle vitesse.

Au cours du procédé décrit ci-dessus, a été utilisée comme position de référence une position mémorisée qui avait été déterminée dans une phase préliminaire durant laquelle le caractère harmonisé de la caméra 6 et de la centrale inertielle 4 pouvait être garanti.

Il convient toutefois de noter qu'un porteur 1 peut être déformable, et donc que certaines parties d'un tel porteur 1 sont susceptibles de se déplacer les unes par rapport aux autres. C'est le cas notamment des extrémités d'ailes d'un aéronef, qui peuvent se déformer par rapport au fuselage de cet aéronef. Ainsi, il est possible qu'un amer 12 puisse se déplacer par rapport à la caméra 6, sans pour autant qu'il n'y ait de désharmonisation substantielle entre la caméra 6 et la centrale inertielle 4. On peut par exemple citer le cas d'une caméra 6 montée sur le fuselage, et tournée vers le côté de l'aéronef, en direction d'une aile, et un amer 12 situé au bout de cette aile. Au cours du déplacement de l'aéronef, l'aile peut battre légèrement de bas en haut si bien que la position de l'amer 12 qui sera ensuite déterminé par l'unité de traitement 8 sera variable. Dans une telle situation, le procédé qui précède pourrait conclure à l'existence d'une désharmonisation entre la caméra 6 et la centrale inertielle 2 sur la base d'un écart de position excessif, alors que ce n'est pas le cas.

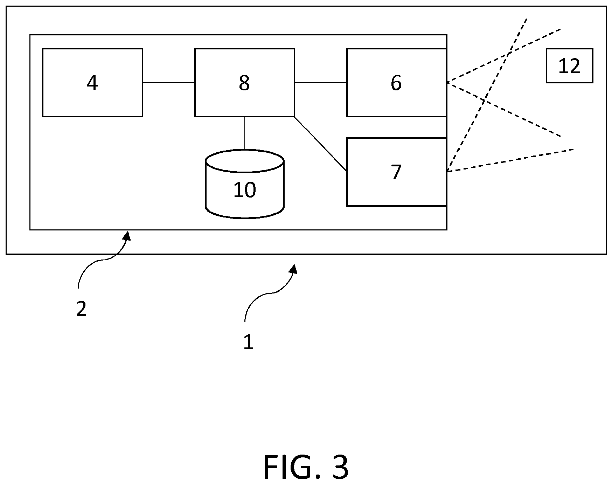

La **figure 3** illustre un mode de réalisation de dispositif d'hybridation 2 permettant de pallier à ce problème de détection de faux positifs. Le dispositif d'hybridation 2 selon ce mode de réalisation comprend une deuxième caméra 7 orientée vers au moins un amer 12 déjà vu par la caméra 6. Cette deuxième caméra 7 utilisée comme source de position de référence.

Chacune des deux caméras 6, 7 est harmonisée avec la centrale inertielle 4 au cours de la phase préliminaire de calibrage. Est mémorisée dans la mémoire 10 une transformation permettant de passer d'un repère attaché à la deuxième caméra 7 vers le repère attaché à la première caméra 6.

Le procédé mis en oeuvre par le dispositif d'hybridation 2 selon ce mode de réalisation diffère du procédé décrit précédemment par l'étape de détermination 106 de la position de référence de l'amer 12, laquelle est mise en oeuvre comme suit.

La deuxième caméra 7 acquiert au moins une deuxième image montrant l'amer 12 également montré dans la première image acquise par la première caméra 6. Toutefois, dans la deuxième image, l'amer 12 est vu sous un angle différent, et à une distance différente. L'unité de traitement 8 applique l'étape 104 à la deuxième image, à savoir reconnaît l'amer 12 dans la deuxième image et localise sa position dans la deuxième image, qu'on appelle par convention deuxième position de l'amer 12.

L'unité de traitement 8 applique ensuite un changement de repère à la deuxième position, de sorte à projeter cette position dans le plan vu par la première caméra 6. Le résultat de ce changement de repère est la position de référence telle que décrite précédemment, dont l'écart avec la position de l'amer 12 dans la première image est ensuite comparé à un seuil. Si d'aventure les deux caméras 6, 7 restent harmonisées avec la centrale inertielle 4, mais que l'amer 12 se déplace relativement à ces deux caméras 6, 7 à cause d'une déformation du porteur 1, cette déformation est compensée par le calcul de l'écart au cours de l'étape 108, qui sera théoriquement nul. En revanche, si l'une des deux caméras 6, 7 se désharmonise par rapport à la centrale inertielle 4, cette désharmonisation se répercutera dans l'écart de position calculé, qui sera alors de valeur plus élevée. Le dépassement du seuil par cet écart révélera la désharmonisation d'une des caméras 6, 7 en présence. En définitive, ce mode de réalisation présente l'avantage d'éviter le signalement de « faux positif » causé par la déformation d'une partie du porteur 1.

Les procédés décrits précédemment trouvent avantageusement application au cours d'une phase de roulage ou d'atterrissage d'un aéronef pour les raisons données en introduction.

## Revendications

1. Dispositif d'hybridation inertielle/vidéo (2) destiné à être embarqué sur un porteur (2), le dispositif comprenant :
- une première caméra (6) configurée pour acquérir une première image montrant un amer (12) prédéterminé fixé sur le porteur (2),
- une deuxième caméra (7) configurée pour acquérir une deuxième image montrant également l'amer (12),
- une unité de traitement (8) configurée pour estimer une vitesse du porteur (2) à partir de la première image acquise, en vue d'hybrider la vitesse estimée avec des données inertielles relatives au porteur (2) produites par une centrale inertielle (4), l'unité de traitement (8) est en outre configurée pour :
- localiser une première position de l'amer (12) dans la première image acquise,
- localiser une deuxième position de l'amer (12) dans la deuxième image acquise,
- déterminer une position de référence de l'amer (12) en appliquant à la deuxième position une transformation prédéterminée représentative d'un changement de repère depuis la deuxième caméra (7) vers la première caméra (6),
- calculer un écart entre la première position localisée et la position de référence de l'amer (12),
- comparer l'écart calculé avec un seuil prédéterminé,
- signaler une alerte lorsque l'écart calculé est supérieur au seuil prédéterminé.

2. Dispositif selon l'une des revendications précédentes, dans lequel l'unité de traitement (8) est configurée pour ne pas hybrider les données inertielles en se fondant sur la vitesse estimée, lorsque l'écart est supérieur au seuil prédéterminé.

3. Dispositif selon l'une des revendications précédentes, dans lequel l'unité de traitement (8) est configurée pour
- estimer la vitesse du porteur en s'aidant de l'écart calculé, de sorte à corriger une désharmonisation de la première caméra (6) par rapport à la centrale inertielle (4), lorsque l'écart calculé n'est pas supérieur au seuil prédéterminé, et pour
- hybrider la vitesse avec les données inertielles de sorte à produire une solution de navigation du porteur (2).

4. Dispositif selon l'une des revendications précédentes, dans lequel l'unité de traitement (8) est configurée pour :
- déterminer un niveau de contraste dans une zone montrant l'amer (12) dans la première image acquise,
- calculer un écart de contraste entre le niveau de contraste déterminé dans la zone et un niveau de contraste de référence,
- comparer l'écart de contraste avec un seuil de contraste prédéterminé,
- signaler une alerte lorsque l'écart de contraste est supérieur au seuil de contraste prédéterminé.

5. Porteur (2), tel qu'un aéronef, comprenant un dispositif d'hybridation inertielle/vidéo (1) selon l'une des revendications précédentes, l'amer (12) étant fixé sur le porteur (2).

6. Procédé d'hybridation inertielle/vidéo, le procédé comprenant des étapes de :
- acquisition (102), par une première caméra (6) embarquée sur un porteur (2), d'une première image montrant un amer (12) prédéterminé fixé sur le porteur (2),
- acquisition (102), par une deuxième caméra (7) embarquée sur le porteur (2), d'une deuxième image montrant également l'amer (12),
- estimation (114) d'une vitesse du porteur (2) à partir de la première image acquise, en vue d'hybrider la vitesse estimée avec des données inertielles relatives au porteur (2) produites par une centrale inertielle (4),
le procédé comprend des étapes de:
- localisation (104) d'une première position de l'amer (12) dans la première image acquise,
- localisation d'une deuxième position de l'amer (12) dans la première image acquise,
- détermination d'une position de référence de l'amer (12) en appliquant à la deuxième position une transformation prédéterminée représentative d'un changement de repère depuis la deuxième caméra (7) vers la première caméra (6),
- calcul (108) d'un écart entre la première position localisée et la position de référence de l'amer (12),
- comparaison (110) de l'écart calculé avec un seuil prédéterminé,
- signalement (112) d'une alerte lorsque l'écart calculé est supérieur au seuil prédéterminé.

7. Procédé selon la revendication précédente, dans lequel le porteur (2) est un aéronef.

8. Procédé selon la revendication précédente, dont les étapes sont mises en oeuvre lorsque l'aéronef (2) est en phase de roulage ou d'atterrissage.

## Patentansprüche

1. Vorrichtung zur Trägheits-/Videohybridisierung (2), die dazu ausgelegt ist, auf einem Träger (2) integriert zu sein, wobei die Vorrichtung Folgendes umfasst:
- eine erste Kamera (6), die so konfiguriert ist, dass sie ein erstes Bild erfasst, das einen vorbestimmten Orientierungspunkt (12) zeigt, der auf dem Träger (2) fixiert ist,
- eine zweite Kamera (7), die so konfiguriert ist, dass sie ein zweites Bild erfasst, das auch den Orientierungspunkt (12) zeigt,
- eine Verarbeitungseinheit (8), die konfiguriert ist, um eine Geschwindigkeit des Trägers (2) aus dem ersten erfassten Bild zu schätzen, um die geschätzte Geschwindigkeit mit Trägheitsdaten des Trägers (2) zu hybridisieren, die von einer Trägheitseinheit (4) erzeugt werden,
wobei die Verarbeitungseinheit (8) ferner konfiguriert ist zum:
- Lokalisieren einer ersten Position des Orientierungspunkts (12) in dem ersten erfassten Bild,
- Lokalisieren einer zweiten Position des Orientierungspunkts (12) in dem zweiten erfassten Bild,
- Bestimmen einer Referenzposition des Orientierungspunkts (12), indem auf die zweite Position eine vorbestimmte Transformation angewendet wird, die eine Markierungsänderung von der zweiten Kamera (7) zu der ersten Kamera (6) darstellt,
- Berechnen einer Differenz zwischen der ersten lokalisierten Position und der Referenzposition des Orientierungspunkts (12),
- Vergleichen der berechneten Differenz mit einem vorbestimmten Schwellenwert,
- Signalisieren eines Alarms, wenn die berechnete Differenz größer als der vorbestimmte Schwellenwert ist.

2. Vorrichtung nach einem der vorhergehenden Ansprüche, wobei die Verarbeitungseinheit (8) konfiguriert ist, um die Trägheitsdaten basierend auf der geschätzten Geschwindigkeit nicht zu hybridisieren, wenn die Differenz größer als der vorbestimmte Schwellenwert ist.

3. Vorrichtung nach einem der vorhergehenden Ansprüche, wobei die Verarbeitungseinheit (8) konfiguriert ist zum
- Schätzen der Geschwindigkeit des Trägers mit Hilfe der berechneten Differenz, um eine Disharmonisierung der ersten Kamera (6) bezüglich der Trägheitseinheit (4) zu korrigieren, wenn die berechnete Differenz nicht größer als der vorbestimmte Schwellenwert ist, und zum
- Hybridisieren der Geschwindigkeit mit den Trägheitsdaten, um eine Navigationslösung für den Träger (2) zu erzeugen.

4. Vorrichtung nach einem der vorhergehenden Ansprüche, wobei die Verarbeitungseinheit (8) konfiguriert ist zum:
- Bestimmen eines Kontrastniveaus in einem Bereich, der den Orientierungspunkt (12) in dem ersten erfassten Bild zeigt,
- Berechnen einer Kontrastdifferenz zwischen dem in dem Bereich bestimmten Kontrastniveau und einem Referenzkontrastniveau,
- Vergleichen der Kontrastdifferenz mit einem vorbestimmten Kontrastschwellenwert,
- Signalisieren eines Alarms, wenn die Kontrastdifferenz größer als der vorbestimmte Kontrastschwellenwert ist.

5. Träger (2), beispielsweise ein Flugzeug, umfassend eine Vorrichtung zur Trägheits-/Videohybridisierung (1) nach einem der vorhergehenden Ansprüche, wobei der Orientierungspunkt (12) auf dem Träger (2) fixiert ist.

6. Verfahren zur Trägheits-/Videohybridisierung, wobei das Verfahren folgende Schritte umfasst:
- Erfassen (102) eines ersten Bildes, das einen vorbestimmten Orientierungspunkt (12) zeigt, der auf dem Träger (2) fixiert ist, durch eine auf dem Träger (2) integrierte erste Kamera (6),
- Erfassen (102) eines zweiten Bildes, das ebenfalls den Orientierungspunkt (12) zeigt, durch eine auf dem Träger (2) integrierte zweite Kamera (7),
- Schätzen (114) einer Geschwindigkeit des Trägers (2) aus dem ersten erfassten Bild, um die geschätzte Geschwindigkeit mit Trägheitsdaten des Trägers (2) zu hybridisieren, die von einer Trägheitseinheit (4) erzeugt werden,
wobei das Verfahren folgende Schritte umfasst:
- Lokalisieren (104) einer ersten Position des Orientierungspunkts (12) in dem ersten erfassten Bild,
- Lokalisieren einer zweiten Position des Orientierungspunkts (12) in dem zweiten erfassten Bild,
- Bestimmen einer Referenzposition des Orientierungspunkts (12), indem auf die zweite Position eine vorbestimmte Transformation angewendet wird, die eine Markierungsänderung von der zweiten Kamera (7) zu der ersten Kamera (6) darstellt,
- Berechnen (108) einer Differenz zwischen der ersten lokalisierten Position und der Referenzposition des Orientierungspunkts (12),
- Vergleichen (110) der berechneten Differenz mit einem vorbestimmten Schwellenwert,
- Signalisieren (112) eines Alarms, wenn die berechnete Differenz größer als der vorbestimmte Schwellenwert ist.

7. Verfahren nach dem vorhergehenden Anspruch, wobei der Träger (2) ein Flugzeug ist.

8. Verfahren nach dem vorhergehenden Anspruch, dessen Schritte durchgeführt werden, wenn das Flugzeug (2) sich in einer Roll- oder Landephase befindet.

## Claims

1. An inertial/video hybridization device (2) intended to be carried on a carrier (2), the device comprising:
- a first camera (6) configured to acquire a first image showing a predetermined landmark (12) attached to the carrier (2),
- a second camera (7) configured to acquire a second image also showing the landmark (12)
- a processing unit (8) configured to estimate a velocity of the carrier (2) from the acquired first image, in order to hybridize the estimated velocity with inertial data relating to the carrier (2) produced by an inertial unit (4),
the processing unit (8) is further configured to :
- locate a first position of the landmark (12) in the first acquired image,
- locate a second position of the landmark (12) in the second acquired image,
- determine a reference position of the landmark (12) by applying to the second position a predetermined transformation representative of a change of reference frame from the second camera (7) to the first camera (6),
- calculate a deviation between the first located position and the reference position of the landmark (12),
- compare the calculated deviation with a predetermined threshold,
- signal an alert when the calculated deviation is greater than the predetermined threshold.

2. A device according to any of the preceding claims, wherein the processing unit (8) is configured not to hybridize the inertial data based on the estimated speed, when the deviation is greater than the predetermined threshold.

3. A device according to any of the preceding claims, wherein the processing unit (8) is configured to
- estimate the velocity of the carrier with the aid of the calculated deviation, so as to correct a deharmonization of the first camera (6) with respect to the inertial unit (4), when the calculated deviation is not greater than the predetermined threshold, and to
- hybridize the velocity with the inertial data so as to produce a navigation solution for the carrier (2).

4. Device according to one of the preceding claims, wherein the processing unit (8) is configured to:
- determine a contrast level in an area showing the landmark (12) in the first acquired image,
- calculate a contrast deviation between the determined contrast level in the area and a reference contrast level,
- compare the contrast deviation with a predetermined contrast threshold,
- signal an alert when the contrast deviation is greater than the predetermined contrast threshold.

5. A carrier (2), such as an aircraft, comprising an inertial/video hybridization device (1) according to any of the preceding claims, the landmark (12) being attached to the carrier (2).

6. A method of inertial/video hybridization, the method comprising the steps of:
- acquisition (102), by a first camera (6) mounted on a carrier (2), of a first image showing a predetermined landmark (12) fixed to the carrier (2),
- acquisition (102), by a second camera (7) mounted on the carrier (2), of a second image also showing the landmark (12),
- estimating (114) a speed of the carrier (2) from the first image acquired, in order to hybridize the estimated speed with inertial data relating to the carrier (2) produced by an inertial unit (4),
the method comprises the steps of:
- locating (104) a first position of the landmark (12) in the first acquired image,
- locating a second position of the landmark (12) in the first acquired image,
- determining a reference position of the landmark (12) by applying to the second position a predetermined transformation representative of a change of reference frame from the second camera (7) to the first camera (6),
- calculating (108) a deviation between the first located position and the reference position of the landmark (12),
- comparing (110) the calculated deviation with a predetermined threshold,
- signalling (112) an alert when the calculated deviation is greater than the predetermined threshold.

7. A method according to the preceding claim, wherein the carrier (2) is an aircraft.

8. A method according to the preceding claim, the steps of which are carried out when the aircraft (2) is in a taxiing or landing phase.
